# EUROPEAN PATENT APPLICATION

(11) **EP 2 506 133 A1**
(43) Date of publication of application: **03.10.2012**
(21) Application number: 12158577.2
(22) Date of filing: 08.03.2012
(51) Int. Cl.: G06F 3/048

(54) **Electronic apparatus for displaying a guide with 3D view and method thereof**

(30) Priority: 30.03.2011 KR 20110029022
(71) Applicant: Samsung Electronics Co., Ltd., Suwon-si, Gyeonggi-do, 443-742 (KR)
(72) Inventor: Park, Young-jin, Seoul (KR); Kang, Eun-jin, Gyeonggi-do (KR)
(74) Representative: Hewett, Jonathan Michael Richard

(57) **Abstract**

An electronic apparatus includes a storage unit which stores therein a guide program regarding the electronic apparatus, a display unit which displays a three dimensional (₃D) view of the electronic apparatus and a tag regarding a hardware component appearing on the ₃D view when the guide program is executed, an input unit which receives a user command directing to rotate the ₃D view, and a control unit which rotates the ₃D view according to the user command, and controls the display unit to display the tag regarding the hardware component appearing on the rotated ₃D view.

## Description

The present invention relates to an electronic apparatus and a method of displaying a guide thereof, and more particularly, to an electronic apparatus to provide a guide with 3 dimensional (3D) view and a method of displaying the guide thereof.

The advancement in the electronic technology enables development and distribution of a variety of electronic apparatuses. That is, a number of products of new types and new functions are increasingly introduced into the market.

Manufacturers or distributors of electronic apparatuses need to provide customers with guides on the use of the electronic apparatuses to ensure that users utilize the functions of the electronic apparatuses adequately. In order to do this, the manufacturers or distributors prepare manuals to guide the users about the functions of the electronic apparatuses. These manuals are usually prepared in a manual book and provided at the purchase of the electronic apparatus, or prepared in an e-book and stored on an inner memory of the electronic apparatus so that the user can view the manuals displayed on a display unit of the electronic apparatus, or downloaded through the Internet server, etc.

The conventional manual explains the product according to categories of functions or contents, added with example illustrations and texts. This means the users have to study the guide carefully enough to efficiently utilize the functions of the electronic apparatus. Further, if a user wishes to know about a certain function, the user has to find the intended function on an index page provided usually at the beginning of the guide and also has to turn pages and find the indicated page. Accordingly, the process is onerous.

Further, since the guide provides general explanation about the functions of the electronic apparatus, a user has to read through all the corresponding explanation, even when the user wants to quickly find out a few things about a certain function.

Further, there is a shortcoming in that the guide does not provide an effective solution to certain complicated matters for the user, such as, matters related to installation, interoperation with other devices, or configuration setup, or the like.

The present invention provides an electronic apparatus to provide a guide with a 3D view which is more easily usable by a user, and a method of displaying the guide thereof.

Additional aspects and advantages of the present invention will be set forth in part in the description which follows and, in part, will be obvious from the description, or may be learned by practice of the invention.

The foregoing and/or other features and utilities of the present invention may be achieved by providing an electronic apparatus which may include a storage unit to store therein a guide program regarding the electronic apparatus, a display unit to display a three dimensional (3D) view of the electronic apparatus and at least one tag regarding at least one hardware component or software content appearing on the 3D view when the guide program is executed, an input unit to receive a user command directing to a rotation of the 3D view, and a control unit to rotate the 3D view according to the user command, and to control the display unit to display at least one new tag regarding at least one new hardware component appearing on the rotated 3D view.

When a cursor is placed on one tag, the control unit may control the display unit to display a simple explanation window on a side of the one tag. The simple explanation window may include at least one of text, image, animation and video to introduce hardware component or software content corresponding to the one tag on which the cursor is placed.

When the cursor is placed on the tag and the tag is selected, the control unit may control the display unit to switch to a detailed explanation screen about a portion corresponding to the tag.

The 3D view may include a touchpad as the input unit of the electronic apparatus. When one tag corresponding to the touchpad is selected, the control unit may control the display unit to switch to a detailed explanation screen to represent functions of respective parts of the touchpad in steps.

When one of the functions displayed on the detailed explanation screen is selected and a function setting is changed according to a user command inputted through the input unit, the control unit may control the display unit to display a preview image to represent an operation or state of the electronic apparatus changed according to the changed function setting.

When one of the functions displayed on the detailed explanation screen is selected and a function setting is changed according to a user command inputted through the input unit, the control unit may apply the changed function setting to the electronic apparatus to change an operation or state setting of the electronic apparatus in response to an apply command inputted through the input unit.

The 3D view may include one or more hotkeys as the input unit of the electronic apparatus. When one tag corresponding to the hotkey provided in the input unit is selected, the control unit may control the display unit to display a detailed explanation screen including respective hotkeys provided in the input unit and a screen of the electronic apparatus, and to display on the screen a change of the operation or state of the electronic apparatus according to a selection of the hotkey when the hotkey is selected on the detailed explanation screen.

When a specific function is selected on the detailed explanation screen, the control unit may control the display unit to display a scenario-based explanation screen regarding the selected function.

The display unit may display a navigation menu on a side of the 3D view When the navigation menu is selected, the control unit may control the display unit to switch to the navigation screen represent respective functions of the electronic apparatus in a text form. When a function is selected on the navigation screen, the control unit may control the display unit to switch to a detailed explanation screen regarding the selected function. The display unit may display on the navigation screen a software function which interoperates with hardware components of the electronic apparatus, and/or a software function which does not interoperate with the hardware component.

When a specific function is selected from among the functions displayed on the navigation screen, the control unit may control the display unit to switch to a scenario-based explanation screen regarding the selected function.

When an icon corresponding to the guide program is selected on the screen of the display unit, the control unit may execute the guide program to display an intro screen regarding the electronic apparatus, and control the display unit to display the 3D view of the electronic apparatus and the tag regarding the hardware component appearing on the 3D view. The intro screen may be skipped.

The foregoing and/or other features and utilities of the present invention may also be achieved by providing a method of displaying a guide of an electronic apparatus, which may include displaying a three dimensional (3D) view of the electronic apparatus and at least one tag regarding at least one hardware component or software content appearing on the 3D view when the guide program regarding the electronic apparatus is executed, and when a user command to rotate the 3D view is inputted, rotating the 3D view according to the user command, and displaying at least one new tag regarding at least one hardware component or software content appearing on the rotated 3D view.

When a cursor is placed on a displayed tag, the method may additionally include displaying a simple explanation window on a side of the tag with the cursor placed there on. The simple explanation window may include at least one of text, image, animation and video to introduce hardware component or software content corresponding to the one tag on which the cursor is placed.

When the cursor is placed on the tag and the tag is selected, the method may additionally include displaying a detailed explanation screen about a portion corresponding to the tag.

When one tag corresponding to a touchpad provided in the electronic apparatus is selected, the method may additionally include displaying a detailed explanation screen to represent functions of respective parts of the touchpad step by step.

When one of the functions displayed on the detailed explanation screen is selected and a function setting is changed according to a user command, the method may additionally include displaying a preview image to represent an operation or state of the electronic apparatus changed according to the changed function setting.

When one of the functions displayed on the detailed explanation screen is selected and function setting is changed according to a user command, the method may additionally include applying the changed function setting to the electronic apparatus to change an operation or state setting of the electronic apparatus in response to an input of an apply command.

When one tag corresponding to a hotkey provided in the electronic apparatus is selected, the method may additionally include displaying a detailed explanation screen including respective hotkeys and a screen of the electronic apparatus, and displaying on the screen a change of an operation or state of the electronic apparatus according to the selection of the hotkey on the detailed explanation screen.

When a specific function is selected on the detailed explanation screen, the method may additionally include displaying a scenario-based explanation screen regarding the selected function.

The method may additionally include displaying a navigation menu on a side of the 3D view, if the navigation menu is selected, switching to the navigation screen representing respective functions of the electronic apparatus in a text form, and if a function is selected on the navigation screen, switching to a detailed explanation screen regarding the selected function.

A first software function which interoperates with hardware components of the electronic apparatus, and/or a second software function which does not interoperate with the hardware component may be displayed on the navigation screen.

When a specific function is selected from among the functions displayed on the navigation screen, the method may additionally include switching to a scenario-based explanation screen regarding the selected function.

The method may additionally include displaying an icon corresponding to the guide program on the screen of the electronic apparatus. When the icon is selected, executing the guide program to display an intro screen regarding the electronic apparatus. The 3D view of the electronic apparatus and the tag regarding the hardware component appearing on the 3D view may be displayed after the intro screen. The intro screen may be skipped.

The foregoing and/or other features and utilities of the present invention may also be achieved by providing a computer readable medium to contain computer readable codes as a program to execute a method of displaying a guide of an electronic apparatus. The method may include displaying a three dimensional (3D) view of the electronic apparatus and at least one tag regarding at least one hardware component or software content appearing on the 3D view, when the guide program regarding the electronic apparatus is executed, when a user command directing to a rotation of the 3D view is inputted, rotating the 3D view according to the user command, and displaying at least one new tag regarding at least one new hardware component or software content appearing on the rotated 3D view.

The foregoing and/or other features and utilities of the present invention may also be achieved by providing an electronic apparatus including a display unit having a structure to display a three dimensional (3D) view of the electronic apparatus, and to display at least one tag image to correspond to at least one portion of the displayed 3D view of the electronic apparatus. The electronic apparatus may further include a control unit configured to control a selection of the tag image, to control the display unit to display a setting of the portion in the 3D view and to change the displayed setting, and to control a function of the electronic apparatus according to the changed setting of the displayed setting in the 3D view.

The control unit may control the display unit to terminate the 3D view of the electronic apparatus and the tag image to display a main page of the display unit of the electronic apparatus to execute the function, and the function of the electronic apparatus is executed according to the changed setting of the display setting in the 3D view.

The foregoing and/or other features and utilities of the present invention may also be achieved by providing an electronic apparatus including a display unit having a structure to display a three dimensional (3D) view of the electronic apparatus, and to display at least one tag image to correspond to at least one portion of the displayed 3D view. The electronic apparatus may further include a control unit configured to control a selection of the tag image, to control a viewing angle of the 3D view of the electronic apparatus to display a new 3D view of the electronic apparatus according to the selected tag image, and to control the display unit to add at least one new tag image to a newly displayed portion of the new 3D view of the electronic apparatus.

The foregoing and/or other features and utilities of the present invention may also be achieved by providing an electronic apparatus including a display unit having a structure to display a three dimensional (3D) view of the electronic apparatus, to display at least one tag image to correspond to at least one portion of the displayed 3D view, the tag image being stationary at a plane of the 3D view, and to display a cursor to select the tag image, the cursor being movable in the 3D view. The electronic apparatus may further include a control unit configured to control a selection of the tag image according to control of the cursor, and to change the 3D view of the electronic apparatus according to the selection of the tab image and the control of the cursor.

The tag image may be a tag to indicate a name of the portion, a window to describe a characteristic of the portion, a screen to describe an operation of the portion, a menu to provide sub-items of the portion, or an icon to select the portion of the 3D view.

The tag image may include a plurality of pages displayable in a new 3View in the display unit of the electronic apparatus to explain about the tag image or the portion of the electronic apparatus.

These and/or other aspects and advantages of the present invention will become apparent and more readily appreciated from the following description of the embodiments, taken in conjunction with the accompanying drawings of which:
FIG. 1 is a block diagram illustrating an electronic apparatus according to an embodiment of the present invention;
FIG. 2 is a view illustrating a process of displaying a guide screen on the electronic apparatus of FIG. 1;
FIG. 3 is a view illustrating an example of an intro screen of a guide screen;
FIG. 4 is a view illustrating an example of a 3D view and one or more tags displayed on an electronic apparatus according to an embodiment of the present invention;
FIG. 5 is a view illustrating a state in which the 3D view is rotated according to a user's selection;
FIGS. 6 to 9 are views illustrating various examples of a detailed explanation screen;
FIG. 10 is a view illustrating a navigation screen provided upon selection of a navigation menu according to an embodiment of the present invention;
FIGS. 11 to 17 are views illustrating various examples of a scenario-based explanation screen;
FIG. 18 is a view provided to explain a method of implementing a function setup state on a guide screen to an electronic apparatus according to an embodiment of the present invention;
FIG. 19 is a flowchart illustrating a method of displaying a guide of an electronic apparatus according to an embodiment of the present invention; and
FIG. 20 is a flowchart illustrating a method of displaying a guide of an electronic apparatus according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures. The matters defined in the description, such as detailed construction and elements, are provided to assist in a comprehensive understanding of the present invention. Accordingly, it is apparent that the exemplary embodiments of the present invention can be carried out without those specifically defined matters. Also, well-known functions or constructions are not described in detail since they would obscure the invention with unnecessary detail.

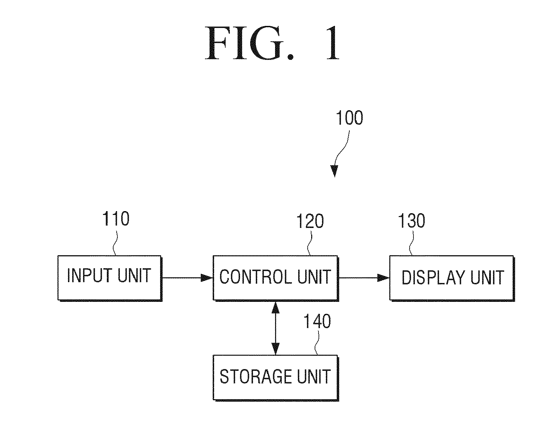

FIG. 1 is a block diagram illustrating an electronic apparatus according to an embodiment of the present invention. Referring to FIG. 1, the electronic apparatus 100 may be implemented as a computer apparatus, a TV, a mobile phone, an electronic frame, a PDA, a MP3 player, an electronic book, or any of various types of products equipped with a display.

The electronic apparatus 100 of FIG. 1 may include an input unit 110, a control unit 120, a display unit 130, and a storage unit 140.

The input unit 110 may be implemented as a keyboard, a mouse, a touchpad, a touch screen, a joystick, or any of various input means, or a combination of the same.

The storage unit 140 may store therein various data and programs related to the electronic apparatus 100. To be specific, the storage unit 140 may include a random access memory (RAM), a read only memory (ROM), a hard disk drive (HDD), a flash memory, a memory card, a memory stick, or any of various storage means, or a combination of the same. The storage unit 140 may be a memory device to store data. The storage unit 140 may store therein the basic data and programs provided by a manufacturer of the electronic apparatus 100, and the data and programs stored by a user in the process of using the electronic apparatus 100. The electronic apparatus may have an interface to communicate with an external device or network such that data and programs can be downloaded from an outside of the electronic apparatus 100, such as the external device or the network, through a wired or wireless communication and the downloaded data and programs can be stored in the storage unit 140. That is, the guide program may be a program provided by a manufacturer, or stored in the storage unit 140 after the purchase of the product, i.e., when a user starts using the product. The 'guide program' as used herein may refer to a program to display on a screen of the electronic apparatus 100 information including, but not limited to, names or functions of the respective components, explanation related to use of software, or the like, or explanation about various ways to utilize the electronic apparatus 100, such as installation, function setup, connection to other devices, etc.

The control unit 120 may read out the guide program from the storage unit 140 to execute the read guide program. The control unit 120 may include a processor to execute the read guide program and generate a signal corresponding to a three dimensional (3D) view. The signal may be a 3D view signal corresponding to an image of the 3D view including one or more tags.

The display unit 130 may display the 3D view and the tag regarding a hardware construction appearing on the 3D view, when the guide program is executed. The display unit 130 may have a circuit element to process the 3D view signal and a structural mechanical element to generate the 3D view according the 3D view signal such that the 3D view is displayed to a user as a screen in the display unit 130 of the electronic apparatus 100.

The '3D view' may refer to an image acquired by actually photographing an appearance of the electronic apparatus 100 as a two dimensional image representing a three dimensionally viewing image of the electronic apparatus 100, or an image representing the appearance of the electronic apparatus 100 with an illusion of a depth added to a two dimensional image, as a three dimensional image. The 3D view may include a three dimensional image and/or a two dimensional image. The two dimensional image may be disposed at a plane of the three dimensional image in the 3D view. The 3D view may be an image displayed, located, or moved in at least one of three major axes thereof.

The '3D view' may refer to a 3D image acquired by using a stereo camera or multi-view camera. In this example, the display unit 130 may be driven to output a left-eye image and a right-eye image alternately and/or may include a display panel formed using, for example, parallax barrier or lenticular technology to generate and/or display the 3D view according to the 3D view signal. Since the 3D image and the parallax barrier or lenticular technology are well-known, detail descriptions thereof are omitted.

The 'tag' may refer to a portion of the 3D view to designate and name a hardware construction, for example, electrical or mechanical components or functions/utilities thereof, in the electronic apparatus 100 appearing on the 3D view. For example, the components of the hardware construction may be arranged at different locations, adjacent locations, or overlapping locations, in the 3D view. The one or more tags may be arranged at different planes in the 3D view. It is also possible that the tags are arranged at a same plane in the 3D view.

Meanwhile, the control unit 120 may control the overall operations of the respective components of the electronic apparatus 100 according to various user commands inputted through the input unit 110.

The control unit 120 may execute the guide program stored at the storage unit 140 in response to a user command input to execute the guide program or when one or more conditions to execute the guide program are met. As a result, the control unit 120 may control the display unit 130 to display the 3D view and the tag.

The user command input to execute the guide program may be inputted by selecting a guide program icon displayed on an initial screen of the display unit 130. Alternatively, the control unit 120 may execute the guide program when the electronic apparatus 100 is initially turned on by a user, or when the electronic apparatus 100 is turned on when the electronic apparatus 100 is in a reset condition set by a predetermined condition or a user preference on the electronic apparatus 100.

Meanwhile, in a state that the 3D view and the tag are displayed, the user may rotate the 3D view. That is, when the user selects at least a portion of the 3D view using a mouse, and drags the portion of the 3D view in a rotational or moving direction, the 3D view rotates or moves to one of upward, downward, leftward and rightward directions according to the direction of rotation/movement and distance of dragging.

It is possible that a user selects an icon (or image) disposed in the 3D view and moves the icon in the rotation direction to rotate the 3D view, using a key, a pointer, a mouse, or a cursor. It is also possible that a key is provided in the electronic apparatus 100 and a user selects or controls the key to move or rotate the 3D view in the rotation direction from a first position to a second position with respect to a reference point or plane. The image of the electronic apparatus 100 is displayable, movable, changeable, or variable in the display unit 130 of the electronic apparatus 100 according to a selected viewing angle or the above-described rotation operation.

As a result, other appearance portion of the electronic apparatus 110 which may not be shown in the first position appears on the screen in the second position, and the display unit 130 automatically shows new tags regarding the newly-appearing hardware construction of the electronic apparatus 100 in the second position. The tags regarding the hardware construction shown in the first position may also disappear from the currently-displayed the 3D view in the second position.

It is possible that one or more first components and one or more first tags are shown in the first position, and one or more second components and one or more second tags are shown in the second position. It is also possible that a portion of the first components in the first position of the 3D view can overlap a portion of the second components in the second position of the 3D view. It is also possible that a portion of the first tags in the first position of the 3D view can overlap a portion of the second tags in the second position of the 3D view. When the electronic apparatus 100 in the 3D view moves or rotates to a third position, the components and tags thereof may not overlap.

That is, the user may view and check the information such as names of the hardware construction appearing to a user such that the user can see the corresponding hardware construction components according to a rotational manipulation of the 3D view.

Meanwhile, the control unit 120 may provide a plurality (series) of explanations in a stepwise manner (or step by step) about the functions provided by the electronic apparatus 100.

Accordingly, if the user places a cursor on a tag, the control unit 120 may control the display unit 130 to display a simple explanation window on a side of a corresponding tag. The 'simple explanation window' may be a region to provide at least one of hardware construction corresponding to the corresponding tag, brief text explanation, video, photograph, animation about the function, and so on. The simple explanation window may be displayed as the user simply places the cursor on the corresponding tag as explained above.

The cursor may be disposed in the 3D view. Accordingly, the cursor may move in two dimensional directions and/or three dimensional directions in the 3D view. The input unit 110 may have a cursor key element to select and/or move the cursor in the two dimensional directions or the three dimensional directions in the 3D view. The cursor key element may have a structure to move the cursor in the two dimensional direction or three dimensional directions to generate a cursor signal to the control unit 120 to move the cursor. The cursor key element may generate a signal corresponding to a detection of a selection, contact or movement of the cursor key element. The signal is transmitted to the control unit 120. According to the signal of the detection, the control unit 120 may generate a signal to display the 3D view including the tags and the cursor.

When the tags are disposed at different locations on different major axes of the 3D view, the cursor may be movable in the corresponding dimensions to select the corresponding tag. When the tags are disposed in a same plane in the 3D view, the cursor may be movable in the two major axes.

In a state that the cursor is placed on the tag, if the tag is selected, the control unit 120 may control the display unit 130 to provide a detailed explanation screen with a present detailed explanation about a hardware construction or function corresponding to the selected tag. In this case, the display unit 130 may display the detailed explanation screen as a next page of the 3D view and tag display screen, or as a separate enlarged display window. Alternatively, it is also possible to additionally display the detailed explanation screen on a specific region of the screen displaying the 3D view and tag. The detailed explanation screen may be implemented in a variety of forms according to the type of the selected tag. This will be explained below.

As described above, the simple explanation window may be displayed when the cursor is placed on a corresponding tag and the detailed explanation screen may be displayed when the corresponding tag is selected, the present invention is not limited thereto. It is possible that the control unit 120 may control the display unit 130 to display the simple explanation window when the user directly selects the corresponding tag using cursor. In this embodiment, a menu to move to the detailed explanation screen may be displayed with the simple explanation window, thus allowing the user to switch to the detailed explanation window by selecting on the corresponding menu.

Further, detailed explanation about one or more of the functions or hardware constructions may be controlled according to a scenario-based method. This will be explained in greater detail below.

Meanwhile, the display unit 130 may display a navigation menu on a side of the 3D view and tag displaying screen. The 'navigation menu' may refer to a menu to generate a navigation screen on which the entire functions or hardware constructions are arranged in a text form. The navigation menu may be provided in a reduced form on a side of the 3D view and tag displaying screen, and upon a user selection on the navigation menu, the control unit 120 may control the display unit 130 to display the navigation screen.

When setting of some of the functions is changed on the detailed explanation screen, a preview image may be provided to show an operation and/or a state of the electronic apparatus which are variable according to the changed setting. The preview image may be presented on the detailed explanation screen, or as a separate screen from the 3d view.

When setting of some function is changed on the detailed explanation screen, the control unit 120 may apply the changed function setting to the electronic apparatus 100 in response to a command of a user to apply the changed functions setting. As a result, the operation or state of the electronic apparatus 100 may be changed in accordance with the changed setting. The changed setting may be stored in the storage unit 140 such that the electronic apparatus 100 can perform an operation thereof according to the changed setting stored in the storage unit 140^{.}

That is, during the use of various guide screens provided in accordance with the execution of the guide program, the user may be able to check the names or functions of various hardware components, and pre-check the setting and changes made in the operation thereof according to the function change and apply the changed function directly to the electronic apparatus 100.

Further, it is possible to provide the stepwise guide regarding the same hardware component, such as the simple explanation window and detailed explanation screen as explained above. Accordingly, when a user wants to simply check the names of the hardware components, the user may rotate the 3D view on the initial screen and view the tag. When a user wants to quickly check the operation of the component or function, the user may do so by checking the simple explanation window. When a user wants to find out more information, the user may check the detailed explanation screen.

The electronic apparatus 100 may have an audio unit to generate an audio signal to represent the 3D view, images, tags, and descriptions in the corresponding windows. The 3D view and audio descriptions may be simultaneously generated.

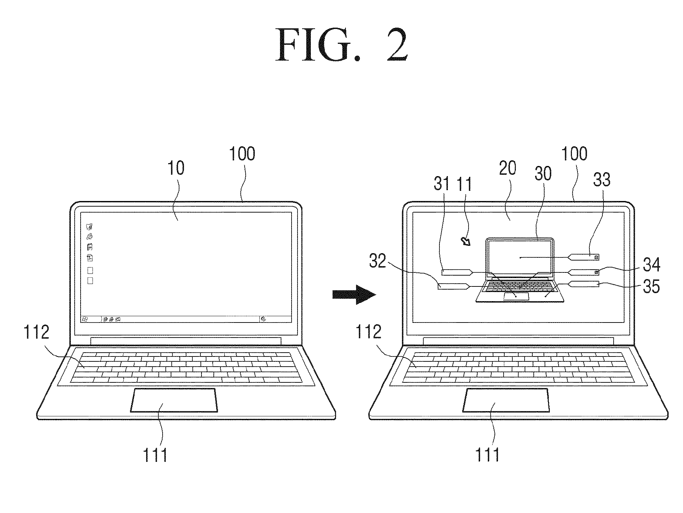

FIG. 2 is a view illustrating a process of executing a guide program according to an embodiment of the present invention. Referring to FIGS. 1 and 2, the process of FIG. 2 may be usable in the electronic apparatus 100 of FIG. 1, and the electronic apparatus 100 of is implemented as a laptop computer which includes a keyboard 112 and a touchpad 111 to generate a 3D view. However, the present invention is not limited thereto. It is possible that other various electronic apparatuses may also be implemented, for example, a mobile device, a tablet computer apparatus, an image forming apparatus, an image processing apparatus, etc.

Referring to FIGS. 1 and 2, when the electronic apparatus 100 is turned on, various icons and cursor 11 may be displayed on an initial screen or background screen 10 as illustrated in the left side of FIG. 2. These icons may correspond to various programs and contents provided by the electronic apparatus 100. If a guide program is stored in the storage unit 140 and an execution file is installed on the electronic apparatus 100, the control unit 120 may control the display unit 130 to display an icon corresponding to the guide program.

Accordingly, when the user selects the icon from the background screen 10, the guide program is executed, and accordingly, the 3D view and the tag display screen, i.e., a guide screen 20 are displayed as illustrated on the right side of FIG. 2.

Referring to FIG. 2, the guide screen 20 may include therein a 3D view 30 corresponding to the appearance of the electronic apparatus 100, and tags 31-35 regarding the respective hardware constitutions displayed on the current 3D view 30.

Meanwhile, before switching between the initial screen 10 and the guide screen 20 illustrated in FIG. 2, an intro (intermediate) screen may be displayed for a preset time (e.g., 2 to 10 seconds).

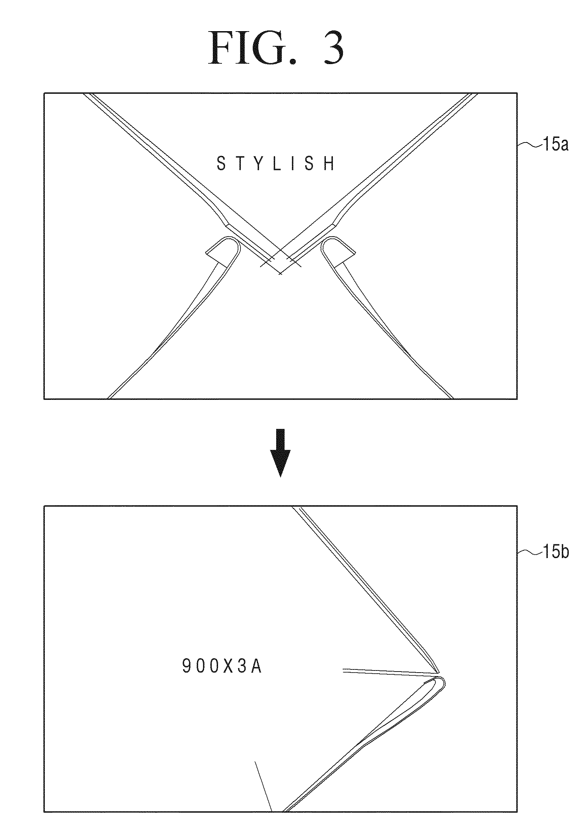

FIG. 3 illustrates examples of intro screens 15a and 15b. The intro screens 15a and 15b of FIG. 3 are screens to display captured video images containing therein a sales pitch about the electronic apparatus 100. The intro screen may be prepared in various forms other than video image, such as graphic image, animation, or the like. Once the intro screen is played back, the screen is automatically switched to the guide screen 20 as illustrated in the right side of FIG. 2. It is possible that the intro screen may be skipped, when the user wants to switch to the guide screen 20 by selecting a specific key (e.g., Esc key, or the like) or any other key while the intro screen is being played back.

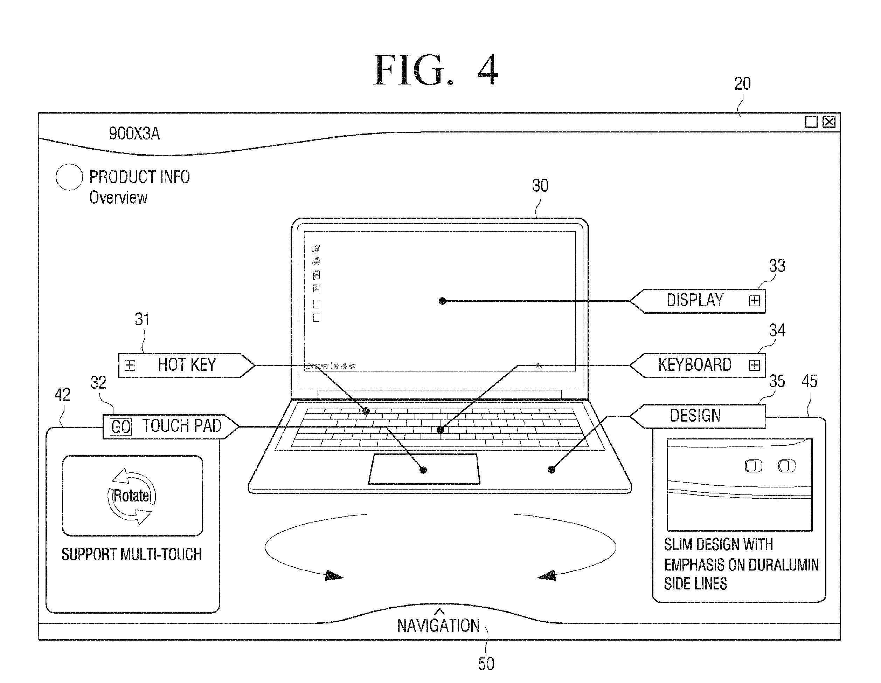

FIG. 4 is an enlarged view of the guide screen 20 of FIG. 2. Referring to FIG. 4, tags 31-35 are displayed. The tags 31-35 may name respective portions of the 3D view 30 which is the representation of the appearance of the electronic apparatus 100. The tags 31-35 may include the corresponding names of the respective portions of the 3D view 30 of the electronic apparatus 100. The tags 31-35 may be connected to the hardware components on the 3D view by indication lines to show the names of the corresponding hardware components.

If the user moves and places the cursor on the tag, the simple explanation window 42 and/or 45 may appear on a side of the corresponding tags 31-35. Referring to FIG. 4, the simple explanation windows 42 and/or 45 are respectively displayed regarding a touchpad tag 32 and a design tag 35. However, the present invention is not limited thereto. It is possible that other types of a window can be displayed to correspond to a tag. Accordingly, when only one cursor is used, one simple explanation window 42 or 45 may be displayed. Alternatively, a tag, such as the design tag 35, may always be added with a usual simple explanation window.

The term "simple explanation window" refers to a portion provided to briefly introduce content of the hardware component or software content corresponding to the tag, and may be implemented in the form including at least one of a text, an image, an animation and a video image, for example.

The cursor may be moved according to manipulation of the mouse or touchpad. However, the present invention is not limited thereto. Accordingly, the simple explanation window 42 or 45 may be displayed as highlighting moves among the respective tags 31-35 according to the manipulation of a direction key.

Meanwhile, a navigation menu 50 may be displayed on the guide screen 20. Referring to FIG. 4, the navigation menu 50 is located on a portion of a screen of a display unit. However, the location and shape of the displayed navigation menu 50 may change. For example, the portion may be a lower portion of the screen of the display unit.

Further, an arrow or any other image may present near the 3D view 30 to indicate a rotatable state thereof. Accordingly, using the cursor, the user may select the 3D view 30, and drag to a direction to rotate the 3D view 30. As a result, the 3D view is rotated.

The guide screen 20 may also provide arrow menus to indicate up/down/left/right directions and other directions. Accordingly, if the user selects one of the arrow menus using the cursor, the 3D view 30 may rotate to a direction corresponding to the selected arrow menu.

The 3D view 30 may be rotated according to the user manipulation on the touchpad 111, or manipulation of the direction keys provided on the keyboard 112.

The 3D view 30 may be displayed as a three dimensional image of the electronic apparatus 100. The tags 31-35, the windows 42 and/or 45, and/or other images and characters may be displayed as a two dimensional image. The indication lines may connect the tags 31-35 of the two dimensional image to the corresponding portions of the three dimensional image of the electronic apparatus 100. It is also possible that the guide screen 20 can include the 3D view 30 of the electronic apparatus 100 and at least one of the tags 31-35, the windows 42 and/or 45, and/or other images and characters as the three dimensional image. However, it is possible that at least one of an image of the guide screen 20 may be a two dimensional image.

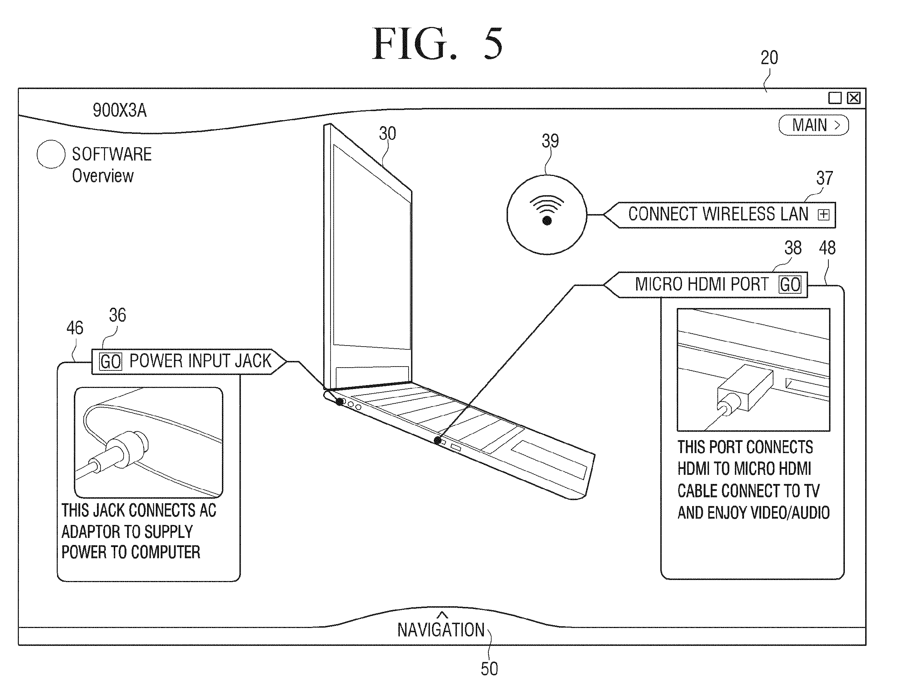

FIG. 5 illustrates a state in which the 3D view 30 is rotated from the first position to the second position on the guide screen 20. Referring to FIG. 5, the 3D view 30 is rotated to the right direction, so that the respective hardware components on a side surface of the electronic apparatus 100 may appear on the 3D view 30.

If the rotation is made as explained above, tags 36-38 are added to the guide screen 20 to indicate newly appearing hardware components, and the previously shown tags 31-35 in the first position may disappear or not be shown in the guide screen 20 in the second position. The newly-added tags 36-38 may be added with the simple explanation windows 46 and 48 according to the location of the cursor in the arrow menus, for example.

One or more tags regarding hidden hardware components or software in the second position may be displayed on a corresponding portion of the guide screen 20. That is, a separate image 39 representing a component of the electronic apparatus 100 may be located in a certain position of the guide screen 20, and the tag 37 regarding a wireless LAN connection may be displayed to correspond to the separate image 39. However, the tag 37 may not be connected to the 3D view 30. The separate image 39 may be provided on the guide screen 20 in a connected form to the 3D view 30.

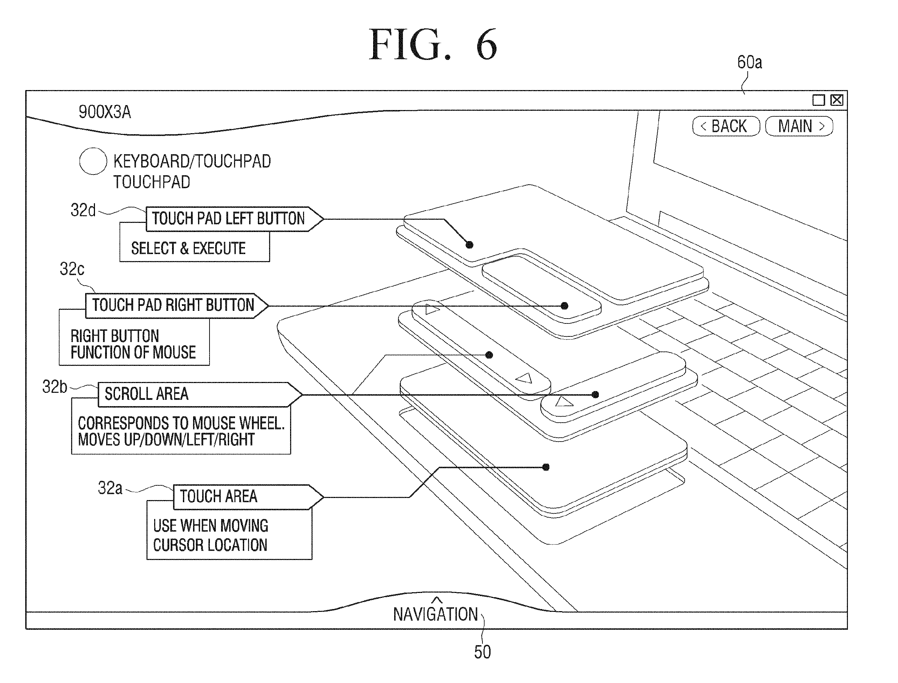

FIG. 6 illustrates an example of a detailed explanation screen 60a displayed on the guide screen 20 according to a selection of a corresponding tag. The detailed explanation screen may appear when the tag 32 about the touch pad included in the input unit 110 is selected. Referring to FIG. 6, when a tag corresponding to a touch pad is selected, the control unit 120 may control the display unit 130 to switch to the detailed explanation screen in which the functions of the respective parts of the touchpad are described in a stepwise manner.

It is possible that a left button, right button, scroll area and touch area of the touchpad 111 are displayed one by one and/or in order, with the corresponding tag and brief explanation 32a - 32d displayed therealong. In such a situation, when the user selects one tag, a lower-level detailed explanation screen 32aa, 32bb, 32cc, or 32dd corresponding to the selected tag may be displayed again. Alternatively, after the screen as the one illustrated in FIG. 6 is displayed, the screen may be automatically switched to a lower-level detailed explanation screen as a predetermined time elapses.

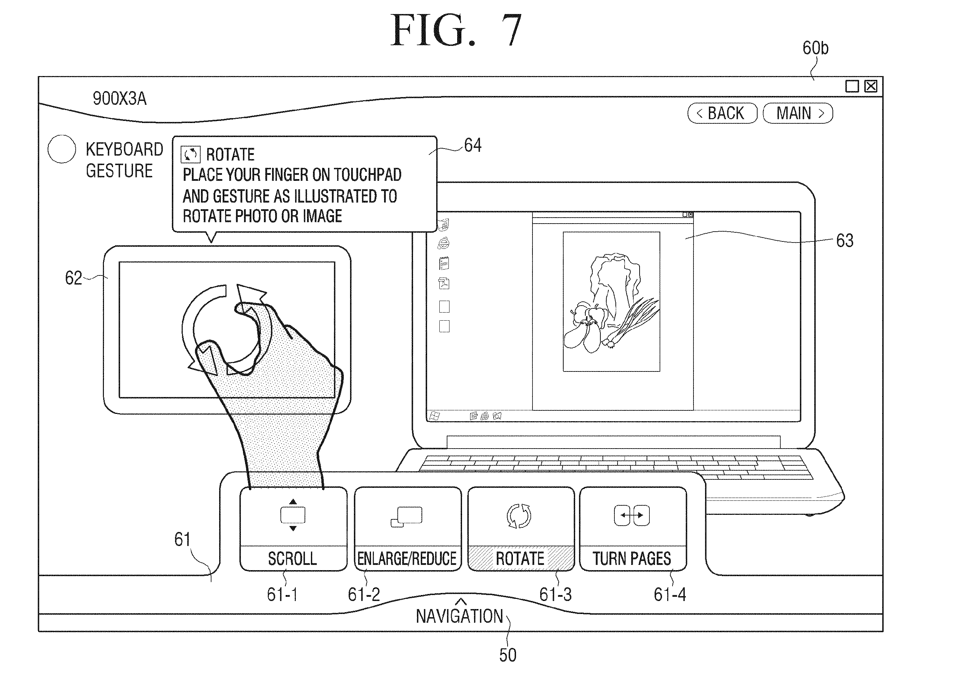

FIG. 7 is a view illustrating an example of a lower-level detailed explanation screen. Referring to a screen 60b of FIG. 7, various functions 61-1, 61-2, 61-3, and 61-4 of the touchpad 111 are displayed on a first area 61 on the screen 60b. The user may select one of the functions 61-1, 61-2, 61-3, and 61-4 to check how to use the corresponding function. That is, the screen 60b of FIG. 7 may include a second area 62 indicating an example of manipulating touchpad, a third area 62 indicating a screen state changed according to the manipulation of the touchpad, and a fourth area 64 providing explanation about the above. FIG. 7 particularly illustrates an example where the rotation function 60-3 is selected.

The first, second, third, and fourth areas 61, 62, 63, and 64 may be overlap in the screen 60b at least a portion thereof. It is possible that the overlap portion may be a superimposed image or at least a half transparent image to a user. It is also possible that there is no overlap portion thereof.

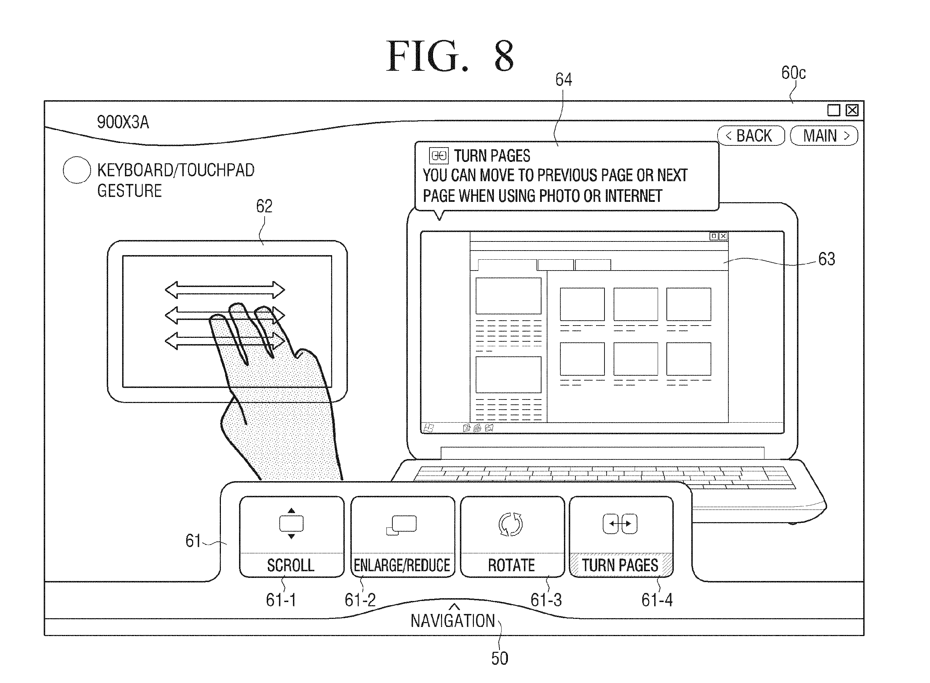

FIG. 8 illustrates a screen 60c having a page turn function 61-4 selected from the first area 61 of the screen 60b of FIG. 7. FIG. 8 illustrates an example of manipulating the touch pad to turn pages. The page turn function 60-4 is displayed on the second area 62, while the third area 63 displays a corresponding page turning operation, and the fourth area 64 displays explanation related to turning pages.

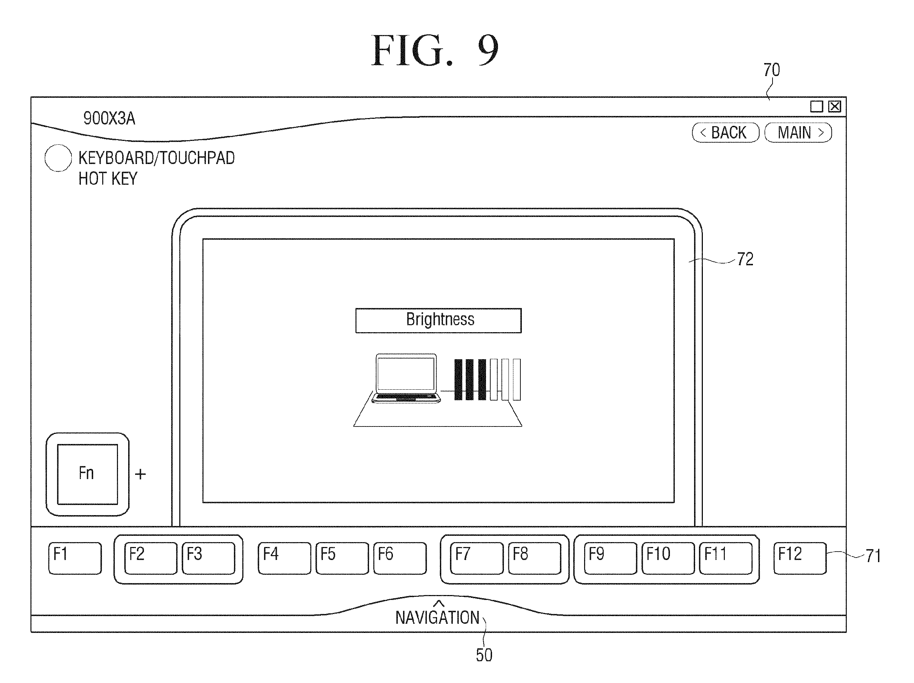

FIG. 9 illustrates a detailed explanation screen 70 appearing when a tag corresponding to a hotkey provided in the input unit 10 is selected. The detailed explanation screen 70 may include a first area 71 to display images of hotkeys corresponding to keys provided in the input unit 110, and a second area 72 to indicate a change in an operation or state of an electronic apparatus according to the manipulation of the hotkeys.

Accordingly, the user is enabled to select the hotkey displayed on the first area 71 and check the corresponding operation or state of the electronic apparatus through the second area 72. That is, the second area 72 may present a preview image corresponding to the selected manipulation of the hotkey. Referring to FIG. 9, a preview image is displayed as a hotkey to adjust the brightness is selected. Various functions other than brightness adjustment, such as clone function, contrast ratio adjustment, sound volume adjustment, or the like may be matched with the hotkeys, and corresponding preview images may be provided according to the selected hotkeys.

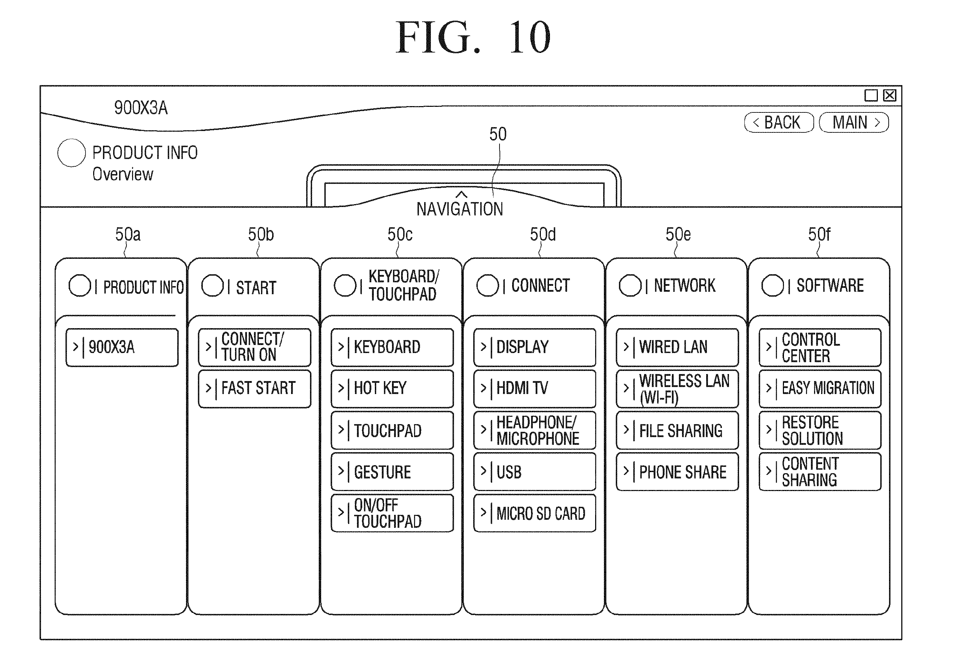

FIG. 10 illustrates a navigation screen to appear according to selection of the navigation menu 50 of FIGS. 4 through 9. Referring to FIG. 10, when the navigation menu 50 is selected in a state that the navigation menu 50 is arranged on a lower side of the screen 20, 60a, 60b, 60c, or 70, the navigation menu 50 moves upward to be extended in a direction, and a navigation screen area is displayed on a lower portion of the moved or extended navigation menu 50.

The navigation screen may include a plurality of function groups 50a to 50f. The plurality of function groups 50a to 50f may be divided and arranged. The groups 50a to 50f may include a software function which interoperates with the hardware component, and a software function which does not interoperate with the hardware component. The software function that interoperates with the hardware component may include a product information (info) group 50a to explain about the product itself, functions included in a keyboard/touchpad group 50c, or functions included in a connect group 50d. Since the functions included in the rest of the groups 51b, 50e, 50f are not directly related to the hardware component, the guide screen 20 may not directly indicate tags thereof. That is, the tags regarding the functions that are not directly related to the hardware may not be connected to the 3D view effectively. In this case, the tags may be selected on the navigation screen. Meanwhile, when some functions are not interoperated with the hardware component, tags may be connected to an image 39 provided separately from the 3D view 30 as illustrated in FIG. 5.

Meanwhile, regarding use or installation of the electronic apparatus 100 or connection between the electronic apparatus 100 and one or more other devices, explanation may be provided on a scenario-based detailed explanation screen.

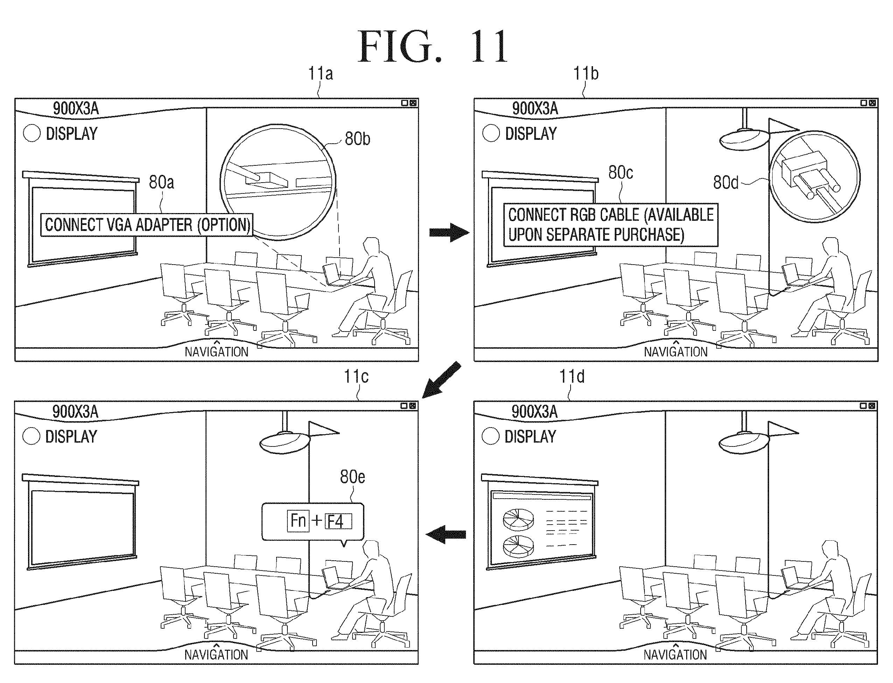

FIG. 11 illustrates scenario-based detailed explanation screens 11a, 11b, 11c, and 11d, which shows a method of connecting the electronic apparatus 100 to an external display device. That is, when "display" of the connect group 50d is selected on the navigation screen of FIG. 10, the scenario-based detailed explanation screen as the one illustrated in FIG. 11 may appear.

The screen 11a of FIG. 11 is displayed to show a detailed explanation screen regarding an environment to connect to an external display device, a text 80a directing how to connect a VGA adapter, and an image 80b to represent a location and shape of a port thereof to connect to the VGA adapter.

Then, as a predetermined time elapses or if a user operates a key, the screen 11b of FIG. 11 is displayed to show a detailed explanation screen regarding a text 80c directing how to connect a monitor cable to the external display device, such as a projector, and an image 80d representing how to connect.

The screen 11c of FIG. 11 is displayed to show an image 80e directing how to change a monitor setting using one or more hotkeys are displayed and the screen 11d is displayed to show the completion of the connection.

The screens 11a through 11d of FIG. 11 may be implemented in the form of flash animation, or a plurality of slides of still images. The connecting a monitor cable to a projector may be represented by a graphic image in which the monitor cable is moved and connected to the projector, as illustrated in the screen 11b of FIG. 11.

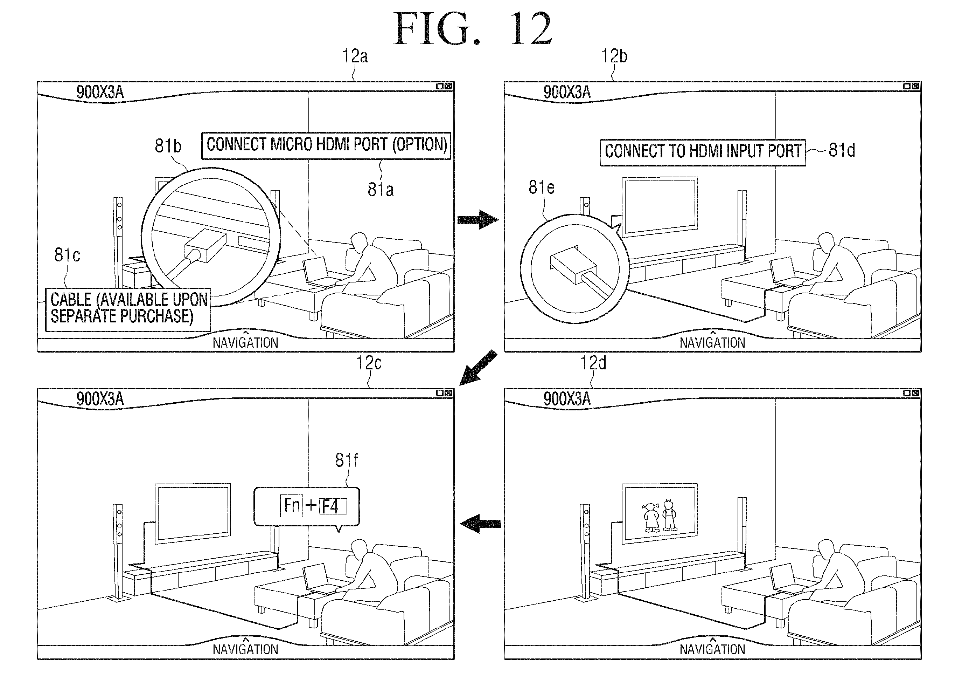

FIG. 12 illustrates scenario-based detailed explanation screens 12a, 12b, 12c, and 12d provided to explain a method of connecting to an HDMI TV. The screen 12a of FIG. 12 shows a guide text 81a suggesting how to connect an HDMI port, an image 81b indicating a location and shape of the port, and an explaining text 81c regarding a cable connected to the port. The screen 12b of FIG. 12 displays a text 81d suggesting a connection to the HDMI input port, and an image 81e representing a way of connection. The screen 12c of FIG. 12 displays an image 81f suggesting a change of a monitor setting. The screen 12d of FIG. 12 displays a state in which connection is completed.

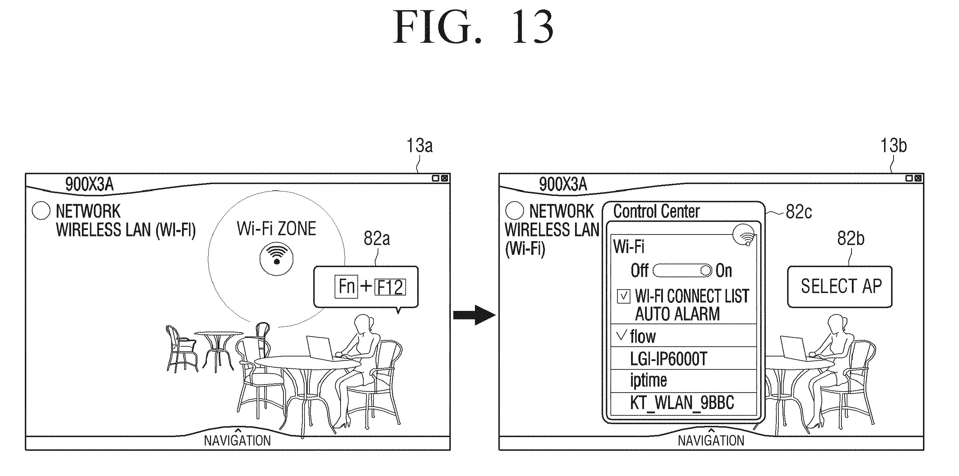

FIG. 13 illustrates scenario-based detailed explanation screens 13a and 13b provided to explain a method of a Wi-Fi connection according to an embodiment. The screen 12a of FIG. 13 is displayed to show an image 82a guiding how to turn on a wireless LAN function at an area where a Wi-Fi relay is installed. The screen 13b of FIG. 13 is displayed to show a text 82b guiding how to select an access point, and an image 82c representing an example of constructing a screen of electronic apparatus for Wi-Fi connection.

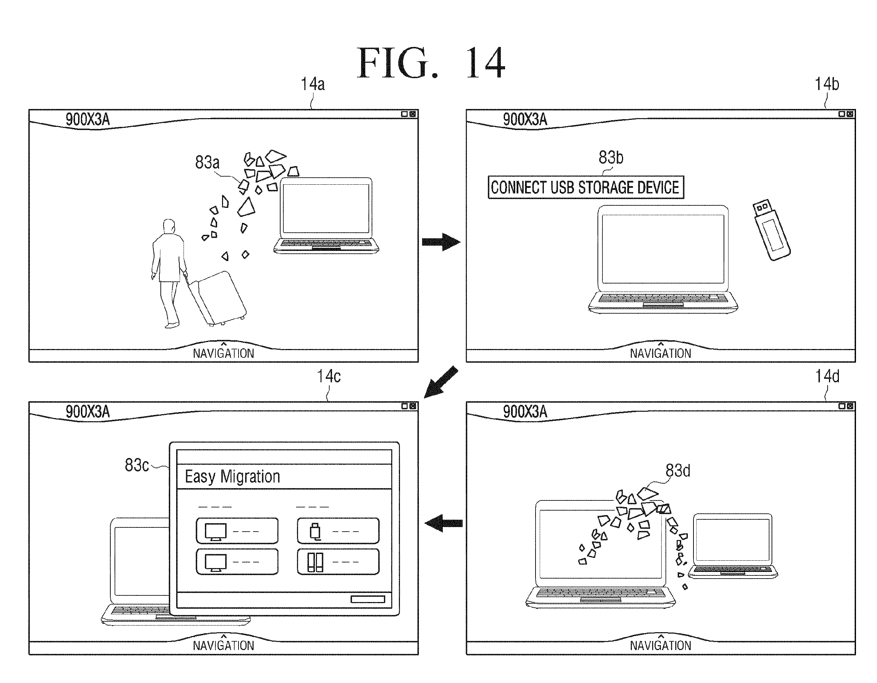

FIG. 14 illustrates scenario-based detailed explanation screens 14a, 14b, 14c, and 14d provided to explain a method of transferring data between electronic apparatuses. The screen of FIG. 14 introduces the purpose of a data transfer function through an intro image. That is, an image 83a may be displayed as an intro image in an animation form, in which the data stored in one electronic apparatus is placed on a carrier and transferred to another electronic apparatus. The screen 14b of FIG. 14 is displayed to show a text 83b suggesting how to select a data transfer method. The screen 14c of FIG. 14 is displayed to show a screen 83c for data transfer. The screen 14d of FIG. 14 is displayed to enable a user to perceive the data transfer between electronic apparatuses. The screen 14d may include a graphic image 83d as an intro image such that the user recognizes that the data transfer is completed.

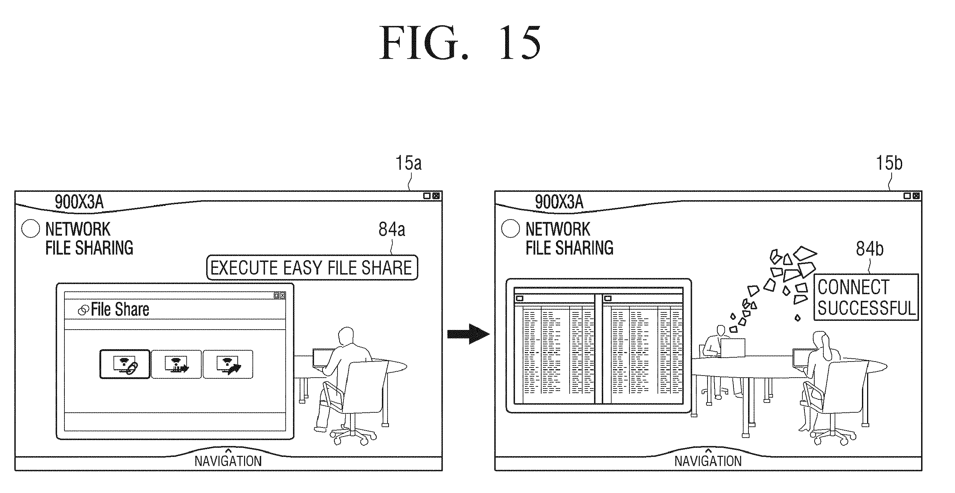

FIG. 15 illustrates scenario-based detailed explanation screens 15a and 15b provided to explain a method of sharing one or more files between two electronic apparatuses. The screen 15a of FIG. 15 is displayed to show a text 84a guiding how to select a function of file sharing. The screen 15b of FIG. 15 is displayed to show a text 84b indicating that the connection is completed and also indication a file sharing ready state.

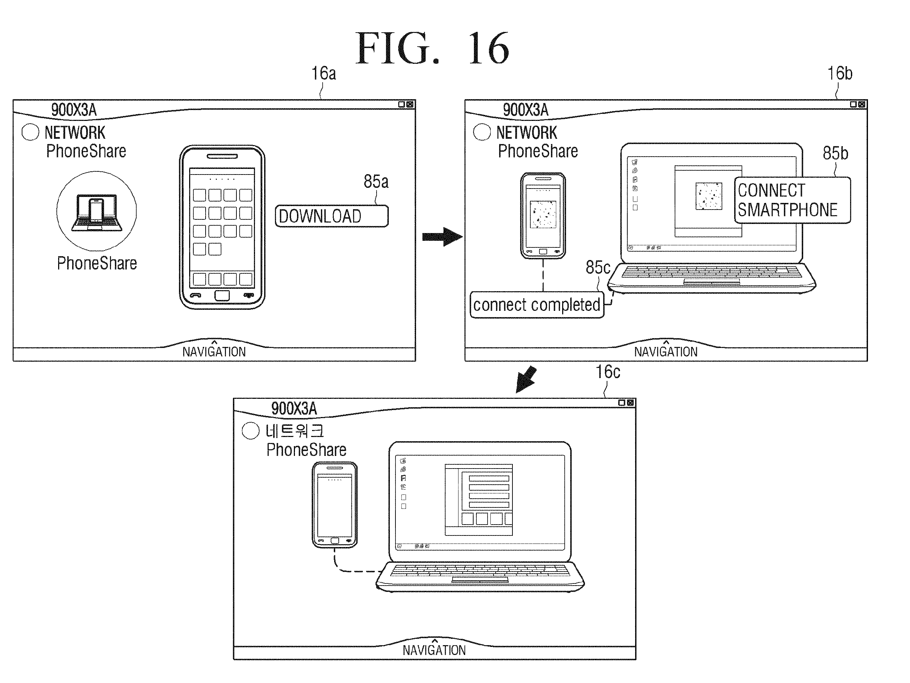

FIG. 16 illustrates scenario-based detailed explanation screens 16a, 16b, and 16c provided to explain a method of sharing software (or program) by connecting a mobile phone with an electronic apparatus. The screen of FIG. 16 is displayed to show a text 85a guiding about a phone share application download function. The screen 16b of FIG. 16 is displayed to show guide texts 85b and 86c regarding the phone share application download function. The screen 16c of FIG. 16 indicates that the mobile phone and the electronic apparatus have been successfully connected to each other for application sharing.

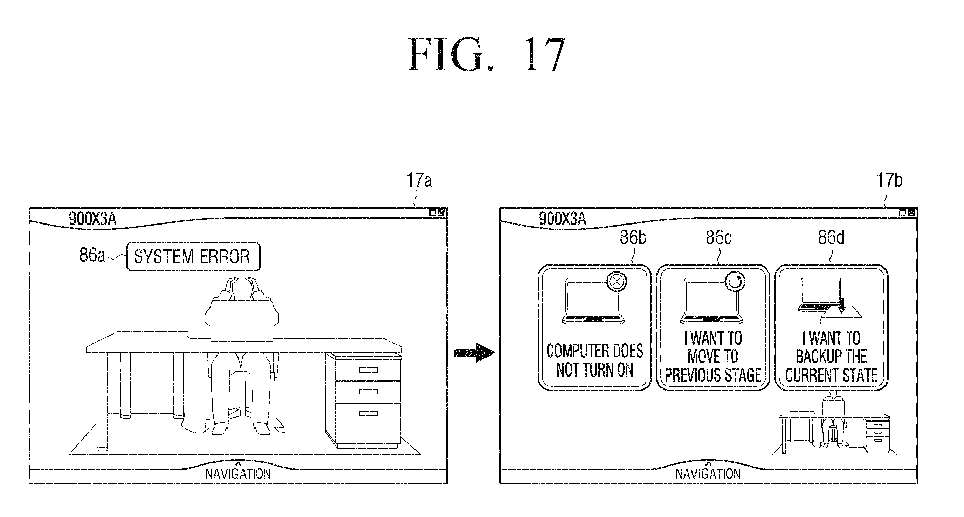

FIG. 17 illustrates scenario-based detailed explanation screens 17a and 17b to show a restoring solution as a trouble shooting. The screen 17a of FIG. 17 shows a system error 86a which is generated in an electronic apparatus. The screen 17b of FIG. 17 shows concepts of various restore solutions 86b, 86c, and 86d as an instruction menu, and information about how to use main functions is presented in stepwise manner.

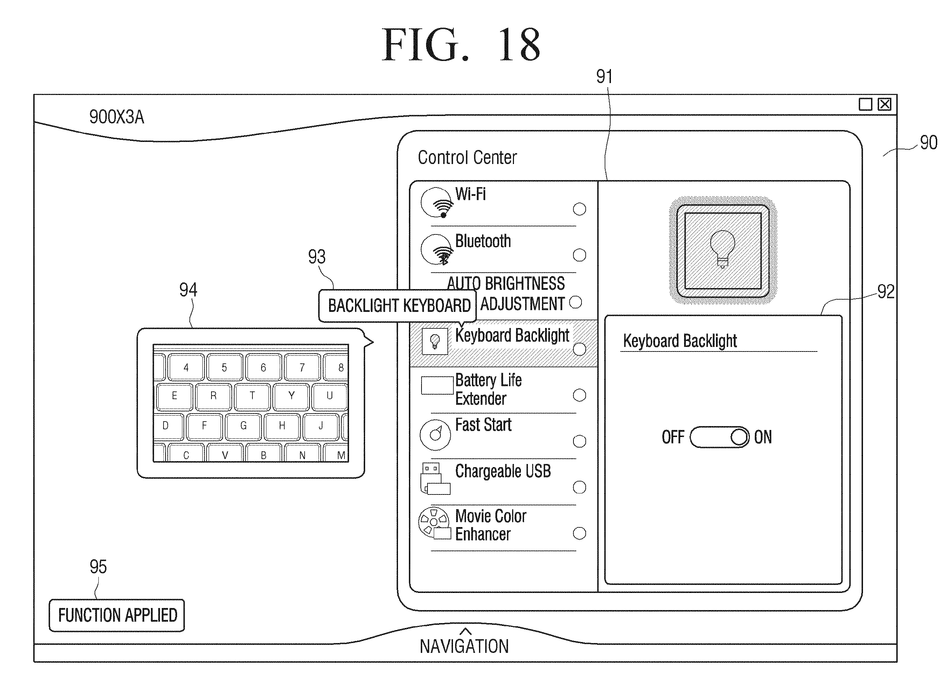

FIG. 18 is a view illustrating a method of selecting a function of an electronic apparatus displayed on a detailed explanation screen 90 and performing the selected function virtually, and applying the selected function to the electronic apparatus to perform an operation using the corresponding component thereof according to the selected function. Referring to FIG. 18, the detailed explanation screen 90 is displayed when a control center function is selected from among the software (programs or menus) of the electronic apparatus 100. The detailed explanation screen 90 may include a function display region 91, an adjustment region 92, a tag 93 indicating each function in the function display region 91, a preview region 94 regarding the selected function and setting adjustment, and a function apply menu 95 to enter an apply command to perform the selected or adjusted function.

The user may select one function on the function display region 91 and adjusts the function at the adjustment region 92. On the preview region 94, the user may check the changes made according to the function adjusted by the user. The user may select the function apply menu 95, the user wants to apply the adjusted function to an actual operation to be performed in one or more components of the electronic apparatus.

As explained above, the electronic apparatus according to an embodiment provides a user with a guide in a variety of ways to enable the user to understand or learn the operation or state of the electronic apparatus. The 'guide' may be interchangeably referred to as an electronic guide, an electronic manual, a product manual, or the like.

Various guide screens and detailed explanation screens are explained above. These screens may be implemented by the electronic apparatus illustrated in FIG. 1. However, since FIG. 1 illustrates components of an electronic apparatus that are related to the execution of the guide program, done or more components may be added to or deleted from the electronic apparatus. It is possible that shapes, sizes, or location of displaying the guide screens, detailed explanation screens, or simple explanation screens can also be changed.

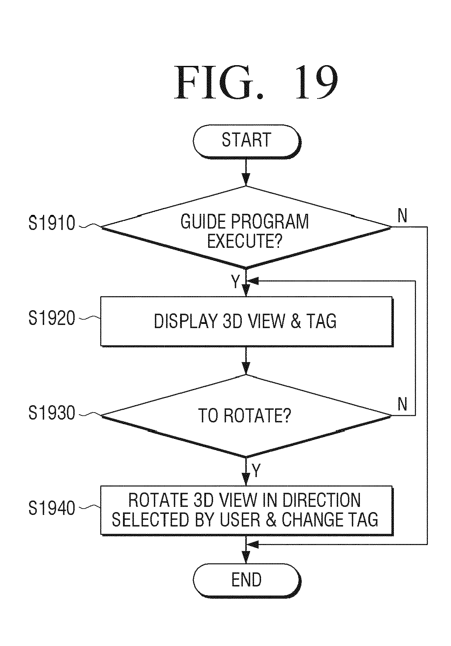

FIG. 19 is a flowchart illustrating a method of displaying a guide of an electronic apparatus according to an embodiment of the present invention.

Referring to FIG. 19, when a guide program is executed at operation S1910, a 3D view and a tag are displayed at operation S1920. The 'guide screen' is referred to as a screen including the 3D view and the tag therein.

The 3D view on the guide screen may be an actual image which may rotate according to a selection by a user. That is, when the user selects the 3D view and gestures to move the selected 3D view to a predetermined direction using a cursor or the like at operation S1930, the 3D view is rotated according to the indicated direction. As a result, a front view and images viewed from various different angles may be displayed on the guide screen. Meanwhile, the tag is displayed to correspond to the hardware component appearing on a side currently displayed on the guide screen. Accordingly, as the 3D view rotates, tags appearing on the guide screen may also change according to the rotation at operation S1940.

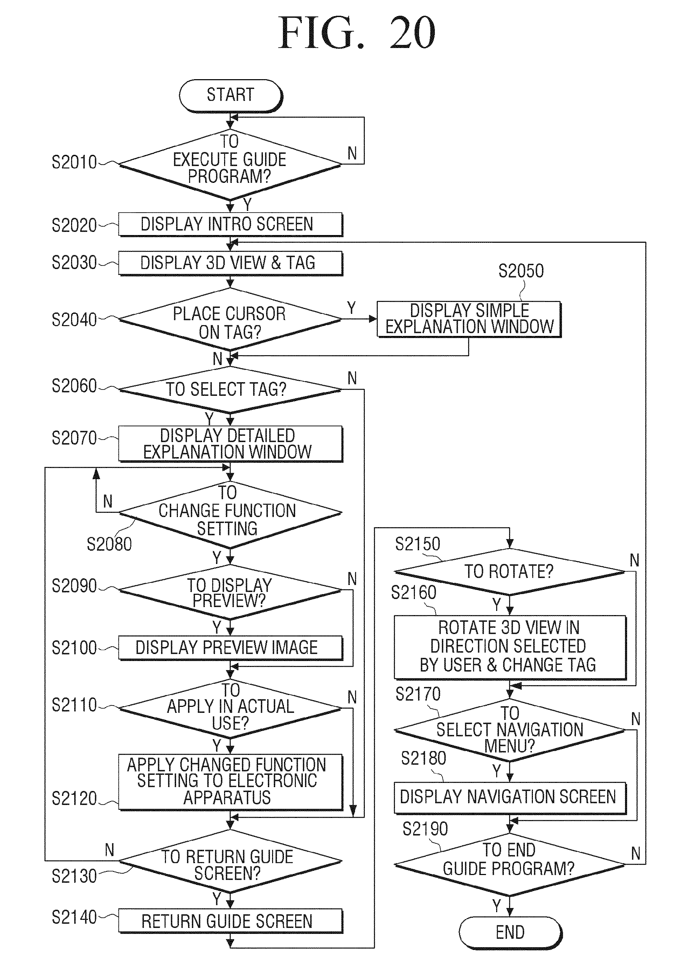

FIG. 20 is a flowchart illustrating a method of displaying a guide of an electronic apparatus according to an embodiment of the present invention.

Referring to FIG. 20, when the guide program is executed at operation S2010, an intro screen is displayed at operation S2020. The guide program may be executed as an icon installed on the screen is selected, or automatically executed when a preset execution condition is met. That is, the guide program may be automatically executed if the electronic apparatus is turned on or reset, on a preset period, or if a user changes a user registration on the electronic apparatus. The intro screen is played back for a preset time and may be skipped.

When the intro screen playback is ended, a guide screen including therein 3D view and tag are displayed at operation S2030.

The user may obtain information about the electronic apparatus in various ways through the guide screen. That is, when the user places the cursor on a tag displayed on the guide screen at operation S2040, the simple explanation window is displayed on a side of the cursor at operation S2050.

Meanwhile, when the user selects the tag at operation S2060, the detailed explanation screen is displayed at operation S2070.

The user may obtain simple explanation about the hardware components or function of the electronic apparatus through the simple explanation window, while he or she may obtain detailed explanation about the hardware component or function through the detailed explanation screen. That is, since the stepwise explanation is provided, the user is guided efficiently and suitably according to the user's level of knowledge or situation.

Further, the user may change the function setting by selecting the function included on the detailed explanation screen at operation S2080. In this case, a preview image may be displayed regarding operation or state of the electronic apparatus corresponding to the change in the function setting at operations S2090 and S2100. The preview image may be displayed automatically on a region as the function setting is changed, or manually displayed when the user selects a menu to provide the preview image.

Meanwhile, when the user selects an apply command to apply the changed function setting to an actual operation of the electronic apparatus at operation S2110, the changed function setting is applied to the electronic apparatus at operation S2120.

Meanwhile, when the user inputs a command to discontinue using the detailed explanation screen and return to the guide screen at operation S2130, the screen is returned to the guide screen at operation S2140.

When the user operates to rotate the 3D view at operation S2150, the 3D view is rotated accordingly, while appropriately changing the tags being displayed at operation S2160.

Meanwhile, when the navigation menu is selected on the guide screen at operation S2170, the navigation screen is displayed at operation S2180. Since the navigation menu and the screen are explained above, detailed explanation thereof will be omitted for the sake of brevity.

As explained above, the user may use the guide program in various methods, and may end the guide program when the user wants to discontinue at operation S2190.

As a result, the user is provided with the stepwise explanation, and can check the names of the components and how to use the same upon rotating the 3D view according to a user preference or a user selection. Further, since the scenario-based detailed explanation screen is provided regarding a specific or selected function, the user understands how to use the electronic apparatus more conveniently. Further, instead of the simple usage explanation, the user can check the purpose of a function through a preview image and directly apply the function to the actual operation of the product. According to various embodiments, by using the guide, user is enabled to check names and functions of respective components of the electronic apparatus conveniently and adaptively.

The above-described tag, window, menu, icon, cursor, and/or screen may be images included in the 3D view of the electronic apparatus, and may be referred to as a tag image to describe the corresponding portion of the displayed 3D view or to adjust a setting of the electronic apparatus.

In the drawings, a character, for example, 900X3A, may be a model name of the electronic apparatus 100, and characters of "main" and "back" may be referred to as a selection of a main image of the 3D view and a previous image of the 3D view, respectively. Characters of □ may be referred to a selection of enlargement or shrinking and a selection of closing of the 3D view from the display unit to change a main page of the electronic apparatus according to an operation of the electronic apparatus other than the display of the 3D view of the electronic apparatus according to the guide program.

The method of displaying a guide according to may be stored on various types of recording media and implemented by the program code which can be executed by a CPU of the electronic apparatus.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, optical data storage devices, flash memory, EPROM (Erasable Programmable ROM), EEPROM (Electronically Erasable and Programmable ROM), register, hard disk, removable disk, memory card, USB memory, CD-ROM, etc. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Although a few embodiments of the present invention have been shown and described, it will be appreciated by those skilled in the art that changes may be made in these embodiments without departing from the invention, the scope of which is defined in the appended claims.

## Claims

1. An electronic apparatus comprising:
a storage unit to store therein a guide program regarding the electronic apparatus;
a display unit to display a three dimensional (3D) view of the electronic apparatus and at least one tag regarding at least one hardware component or software content appearing on the 3D view, if the guide program is executed;
an input unit to receive a user command directing to rotate the 3D view; and
a control unit to rotate the 3D view according to the user command, and control the display unit to display a new tag regarding another hardware component or software content appearing on the rotated 3D view.

2. The electronic apparatus of claim 1, wherein, when a cursor is placed on one tag, the control unit controls the display unit to display a simple explanation window on a side of the one tag, and the simple explanation includes at least one of text, image, animation and video to introduce hardware component or software content corresponding to the one tag on which the cursor is placed.

3. The electronic apparatus of claim 2, wherein, when the cursor is placed on the tag and the tag is selected, the control unit controls the display unit to switch to a detailed explanation screen of a portion corresponding to the tag.

4. The electronic apparatus of claim 3, wherein, when one of the functions displayed on the detailed explanation screen is selected and a function setting is changed according to a user command inputted through the input unit, the control unit controls the display unit to display a preview image to represent an operation or state of the electronic apparatus changed according to the changed function setting.

5. The electronic apparatus of claim 3, wherein, when one of the functions displayed on the detailed explanation screen is selected and a function setting is changed according to a user command inputted through the input unit, the control unit applies the changed function setting to the electronic apparatus to change operation or state setting of the electronic apparatus in response to an apply command inputted through the input unit.

6. The electronic apparatus of claim 2, wherein the 3D view includes a touchpad as the input unit of the electronic apparatus, and when one tag corresponding to the touchpad is selected, the control unit controls the display unit to switch to a detailed explanation screen to represent functions of respective parts of the touchpad step by step.

7. The electronic apparatus of claim 2, wherein the 3D view includes a hotkey as the input unit of the electronic apparatus, and when one tag corresponding to the hotkey provided in the input unit is selected, the control unit controls the display unit to display a detailed explanation screen including respective hotkeys provided in the input unit and a screen of the electronic apparatus, and to display on the screen a change of an operation or state of the electronic apparatus according to selecting of the hotkey when the hotkey is selected on the detailed explanation screen.

8. The electronic apparatus of any of claims 1 to 7, wherein:
the display unit displays a navigation menu on a side of the 3D view;
when the navigation menu is selected, the control unit controls the display unit to switch to the navigation screen representing respective functions of the electronic apparatus in text form;
when a function is selected on the navigation screen, the control unit controls the display unit to switch to a detailed explanation screen regarding the selected function; and
the navigation screen includes a software function which interoperates with hardware components of the electronic apparatus, or a software function which does not interoperate with the hardware component.

9. A method of displaying a guide of an electronic apparatus, the method comprising:
displaying a three dimensional (3D) view of the electronic apparatus and at least one tag regarding at least one hardware component or software content appearing on the 3D view, when the guide program regarding the electronic apparatus is executed; and
when a user command directing a rotation of the 3D view is inputted, rotating the 3D view according to the user command, and displaying a new tag regarding a new hardware component or software content appearing on the rotated 3D view.

10. The method of claim 11, further comprising:
when a cursor is placed on the displayed tag, displaying a simple explanation window regarding the tag with the cursor placed thereon one side of the tag,
wherein the simple explanation window includes at least one of text, image, animation and video to introduce hardware component or software content corresponding to the one tag on which the cursor is placed.

11. The method of claim 10, further comprising:
when the cursor is placed on the tag and the tag is selected, displaying a detailed explanation screen of a portion corresponding to the tag.

12. The method of claim 11, further comprising:
when one of the functions displayed on the detailed explanation screen is selected and function setting is changed according to a user command, displaying a preview image representing operation or state of the electronic apparatus changed according to the changed function setting.

13. The method of claim 11, further comprising:
when one of the functions displayed on the detailed explanation screen is selected and a function setting is changed according to a user command, applying the changed function setting to the electronic apparatus to change operation or state setting of the electronic apparatus in response to input of an apply command.

14. The method of claim 11, further comprising:
when one tag corresponding to a hotkey provided in the electronic apparatus is selected:
displaying a detailed explanation screen including respective hotkeys and the screen of the electronic apparatus; and
displaying on the screen a change of an operation or state of the electronic apparatus according to selecting of the hotkey when the hotkey is selected on the detailed explanation screen.

15. The method of any of claims 9 to 14, further comprising:
displaying a navigation menu on a side of the 3D view;
when the navigation menu is selected, switching to the navigation screen representing respective functions of the electronic apparatus in text form; and
when a function is selected on the navigation screen, switching to a detailed explanation screen regarding the selected function,
wherein the navigation screen includes at least one of a software function which interoperates with hardware components of the electronic apparatus, and a software function which does not interoperate with the hardware component.
